Europäisches Patentamt

European Patent Office

Office européen des brevets

(19)

(11) **EP 0 745 626 B1**

(12) **EUROPÄISCHE PATENTSCHRIFT**

(45) Veröffentlichungstag und Bekanntmachung des Hinweises auf die Patenterteilung:
**24.11.1999 Patentblatt 1999/47**

(51) Int Cl.$^6$: **C08G 18/12**, C08G 18/32

(21) Anmeldenummer: **96107839.1**

(22) Anmeldetag: **17.05.1996**

(54) **Verfahren zur Herstellung von Ester- und Urethangruppen enthaltenden Formkörpern, estergruppenhaltige Isocyanat-Semiprepolymere hierfür und ihre Verwendung**

Process for the preparation of ester and urethane groups containing moulding materials, ester group containing isocyanate-semiprepolymers for this process, and their use

Procédé pour la préparation de masses de moulage contenant des groupes d'ester et d'uréthane, des prépolymères d'isocyanate contenant des groupes d'ester pour ce procédé et leur utilisation

(84) Benannte Vertragsstaaten:
**AT BE DE FR GB IT NL**

(30) Priorität: **26.05.1995 DE 19519335**

(43) Veröffentlichungstag der Anmeldung:
**04.12.1996 Patentblatt 1996/49**

(73) Patentinhaber: **BASF AKTIENGESELLSCHAFT**
**67056 Ludwigshafen (DE)**

(72) Erfinder:
 • **Volkert, Otto, Dr.**
  **67273 Weisenheim (DE)**
 • **Brandt, Peter, Dr.**
  **67059 Ludwigshafen (DE)**
 • **Fuchs, Harald**
  **86556 Kühbach (DE)**

(56) Entgegenhaltungen:
 EP-A- 0 360 087    EP-A- 0 582 385
 US-A- 4 132 839    US-A- 4 647 596

**Beschreibung**

Gegenstand der Erfindung ist ein Verfahren zur Herstellung von Ester- und Urethangruppen enthaltenden Formkörpern mit einem zelligen Kern und einer verdichteten Randzone, sogenannten Polyurethan(PU)-Integralschaumstoffen, durch Umsetzung von estergruppenhaltigen Isocyanat-Semiprepolymeren (a) mit höhermolekularen Polyhydroxylverbindungen (b), vorzugsweise Polyester-polyolen, und gegebenenfalls niedermolekularen Kettenverlängerungs- und/ oder Vernetzungsmitteln (c) in Gegenwart von Treibmitteln (d), vorzugsweise Wasser, Katalysatoren (e) sowie gegebenenfalls Zusatzstoffen (f) in einem geschlossenen Formwerkzeug, wobei erfindungsgemäß bei Raumtemperatur flüssige, estergruppenhaltige Isocyanat-Semiprepolymere mit einem Isocyanatgehalt von 10 bis 26 Gew.-% Verwendung finden, die hergestellt werden durch Umsetzung von

ai) 4,4'-Diphenylmethan-diisocyanat, abgekürzt auch MDI genannt, oder Mischungen aus 4,4'-MDI und gegebenenfalls modifizierten MDI-Isomeren mit

aii) di- bis trifunktionellen Polyester-polyolen mit Molekulargewichten von 600 bis 3000 und

aiii) mindestens einer verzweigtkettigen, mindestens eine Estereinheit als Brückenglied gebunden enthaltenden Dihydroxyverbindung mit einem Molekulargewicht bis 500.

Gegenstände der Erfindung sind ferner die Verwendung der hergestellten Formkörper als Schuhsohlen und die neuen z.B. erfindungsgemäß verwendbaren, bei Raumtemperatur flüssigen estergruppenhaltigen Isocyanat-Semiprepolymeren.

Die Herstellung von Formkörpern mit einem zelligen Kern und einer verdichteten Randzone durch Umsetzung von organischen Polyisocyanaten, höhermolekularen Verbindungen mit mindestens zwei reaktiven Wasserstoffatomen und gegebenenfalls Kettenverlängerungsmitteln in Gegenwart von Treibmitteln, vorzugsweise physikalisch wirkenden Treibmitteln, Katalysatoren, Hilfs- und/oder Zusatzstoffen in einem geschlossenen, gegebenenfalls temperierten Formwerkzeug unter Verdichtung ist seit langem bekannt und wird beispielsweise beschrieben in der DE-A-16 94 138 (GB-A-1 209 243), DE-A-19 55 891 (GB-A-1 321 679) und DE-A-17 69 886 (US-A-3 824 199).

Bekannt ist auch die Herstellung von Sohlenmaterial nach dem Polyisocyanat-polyadditionsverfahren und die Verwendung von Urethangruppen enthaltenden Schuhsohlen in der Schuhindustrie. Als wesentliche Anwendungsgebiete für Polyisocyanat-polyadditionsprodukte in der Schuhindustrie sind das direkte Anschäumen von Sohlen und die Herstellung von Polyurethan(PU)-Fertigsohlen zu nennen. Derartige PU-Schuhsohlen können nach der Niederdruck- oder Hochdruck-Technik (RIM) hergestellt werden (Schuh-Technik + abc, 10/1980, Seiten 822 ff).

Eine zusammenfassende Übersicht über Polyurethan-Integralschaumstoffe wurde beispielsweise veröffentlicht in Integralschaumstoffe von Dr. H. Piechota und Dr. H. Röhr, Carl-Hanser-Verlag, München, Wien 1975 und in Kunststoff-Handbuch, Band 7, Polyurethane von Dr. G. Oertel, Carl-Hanser-Verlag, München, Wien, 2. Auflage, 1983, Seiten 333 ff, in dem auch über die Verwendung von Integralschaumstoffen in der Schuhindustrie berichtet wird (Seiten 362 bis 366).

4,4'-MDI und 2,4'-MDI besitzen einen Schmelzpunkt von 39,5°C bzw. 34,5°C und sind daher bei Raumtemperatur üblicherweise fest und nur schwierig zu verarbeiten. Es hat daher nicht an Versuchen gefehlt, durch Modifizierung von 4,4'- und/oder 2,4'-MDI bei Raumtemperatur flüssige Polyisocyanatzusammensetzungen auf MDI-Basis herzustellen. Üblicherweise werden hierzu 4,4'- und/oder 2,4'-MDI mit unterschüssigen Mengen Alkylenglykolen, Dialkylenglykolen, niedermolekularen und/oder höhermolekularen di- und/ oder trifunktionellen Polyoxyalkylen-polyolen zu sogenannten Isocyanat-Semiprepolymeren umgesetzt, die bei Raumtemperatur flüssig sind.

Hierzu wird beispielsweise nach Angaben der DE-C-16 18 380 (US-A-3 644 457) ein bei Raumtemperatur flüssiges MDI-Präparat hergestellt durch Umsetzung von 1 Mol 4,4'- und/oder 2,4'-MDI mit 0,1 bis 0,3 Mol Tri-1,2-propylenether-glykol und/oder Poly-1,2-propylenether-glykol mit einem Molekulargewicht bis 700. Mit Dipropylen-glykol partiell umgesetztes 4,4'-MDI oder partiell umgesetzte Mischungen aus MDI-Isomeren und Polyphenyl-polymethylen-polyisocyanaten, sogenanntes Roh-MDI, werden gemäß EP-B-0 364 854 (CA-A-2 000 019) zur Herstellung von Formkörpern mit einer verdichteten Randzone und einem zelligen Kern, sogenannten Integralschaumstoffen, vorzugsweise Schuhsohlen, verwendet.

Flüssige, Urethangruppen gebunden enthaltende Polyisocyanatmischungen auf MDI-Basis mit einem Isocyanatgehalt von 22 bis 30 Gew.-% können nach Angaben der EP-A-0 557 792 (US-A-5 374 667) erhalten werden u. a. durch partielle Umsetzung von Roh-MDI mit einem Polyoxypropylen-polyoxyethylen-polyol mit einer Funktionalität von 2,5 bis 3,5, einer Hydroxylzahl von 50 bis 90 und einem Gehalt an polymerisierten Ethylenoxidgruppen von mehr als 30 bis weniger als 50 Gew.-%, bezogen auf das Gewicht an polymerisierten Ethylenoxid- und 1,2-Propylenoxidgruppen. Die Isocyanat-Semiprepolymeren finden bevorzugt Verwendung zur Herstellung von FCKW-freien PU-(Form)weichschaumstoffen.

Zur Herstellung von Polyester-polyurethanen können in analoger Weise MDI und/oder Roh-MDI mit Polyester-polyolen zu Isocyanat-Semiprepolymeren umgesetzt und diese zur Herstellung von Formkörpern verwendet werden.

Nach Angaben der US-A-4 857 561 werden z.B. MDI und/oder Polyphenyl-polymethylen-polyisocyanate mit einem Polyneopentylglykoladipat mit einem Molekulargewicht von 750 bis 3500 und einer Funktionalität von 2 bis 3 zu einem Isocyanat-Semiprepolymer mit einem Isocyanatgehalt von 14 bis 28 Gew.-% umgesetzt und aus diesem nach dem RIM-Verfahren in einem geschlossenen Formwerkzeug ein Formkörper hergestellt. Anstelle von Neopentylglykol werden nach CA-A-1 096 181 Polyadipate auf Basis von Tripropylenglykol, Butandiol und Ethylenglykol zur Modifizierung von 4,4'-MDI verwendet. Gemäß DE-A-3 831 681 (US-A-5 053 528) werden Estergruppen gebunden enthaltende Dihydroxyverbindungen der Formel

$$HOH_2C\text{-}C(CH_3)_2\text{-}CO\text{-}O\text{-}R\text{-}O\text{-}CO\text{-}C(CH_3)_2\text{-}CH_2OH,$$

in der R einen gegebenenfalls verzweigten Alkylenrest oder einen Polyoxyalkylenrest bedeutet, mit 4,4'- und 2,4'-MDI oder Mischungen aus 4,4'-MDI, 2,4'-MDI und Roh-MDI zu Isocyanat-Semiprepolymeren umgesetzt. Durch die Verwendung von Esterdiolen oder Polyesterdiolen mit Methylseitengruppen konnte die Lagerstabilität der Isocyanat-Semiprepolymeren verbessert werden. Offensichtlich bedingt durch den hohen Gehalt an verzweigten Diolen in den Isocyanat-Semiprepolymeren wurden jedoch die mechanischen Eigenschaften der hieraus hergestellten PU-Integralschaumstoffe verschlechtert.

Die US-A-4 182 898 beschreibt lagerbeständige, bei Raumtemperatur flüssige Isocyanatprepolymere, die hergestellt werden durch Umsetzung von Diisocyanaten, wie z.B. HDI, JPDI, TDI und MDI, mit Mischungen aus miteinander verträglichen Polyether- und Polyester-polyolen im Verhältnis von 15 bis 85 zu 85 bis 15 Gew.-% und in einem Verhältnis von NCO-:OH-Gruppen von 1,5:1 bis 2:1.

Nach Angaben der US-A-4 647 596 werden mikrozellulare PU-Elastomere hergestellt aus einem Isocyanatprepolymeren, dessen Polyolkomponente aus einem Polyester-polyether-polyol aus Polyoxytetramethylen-glykol und ε-Caprolacton im Gewichtsverhältnis 20:80 bis 80:20 mit einem Molekulargewicht von 1000 bis 3000 und einem Polyester-polyol auf der Grundlage von Adipinsäure mit einem Molekulargewicht von 1000 bis 3000 besteht und dessen Isocyanatkomponente 4,4'-MDI ist. Mit Wasser als Treibmittel hergestellte PU-Integralschaumstoffe werden nach US-A-5 166 183 erhalten durch Umsetzung eines Isocyanatprepolymeren mit einem Isocyanatgehalt von 16 bis 25 Gew.-%, hergestellt aus MDI und einem Polyesterdiol mit einem Molekulargewicht von 1000 bis 3000 und gegebenenfalls gemischt mit einem Isocyanatprepolymeren auf Basis MDI und Polyoxypropylen-glykol mit einem Molekulargewicht von 134 bis 700 und einer speziellen Mischung aus höhermolekularen Polyether-diolen, -polyolen, 1,4-Butandiol und Ethylenglykol. Die US-A-4 986 929 beschreibt Polyisocyanatmischungen mit einem Isocyanatgehalt von 16 bis 25 Gew.-%, die im wesentlichen bestehen aus einem Isocyanatprepolymeren aus MDI und einem Polyoxypropylen-glykol mit einem Molekulargewicht von 134 bis 700 und einem Isocyanatprepolymeren, hergestellt durch Umsetzung einer Mischung aus MDI und carbodiimidgruppenhaltigem MDI mit einem Polyester-diol mit einem Molekulargewicht von 1000 bis 3000. Nachteilig an den beschriebenen Isocyanatprepolymeren ist die Bildung von Fehlstellen an der Oberfläche daraus hergestellter PU-Integralschaumstoffe, die durch eine mangelhafte Verträglichkeit von Polyether- und Polyester-Isocyanatprepolymeren verursacht werden kann.

EP-A-0 582 385 beschreibt mikrozellulare PU-Elastomere, die aus einem Isocyanat-Polyester-Prepolymeren hergestellt werden.

Die Aufgabe der vorliegenden Erfindung bestand darin, Ester- und Urethangruppen aufweisende Formkörper mit einem zelligen Kern und einer verdichteten Randzone mit zumindest gleich guten, vorteilhafterweise jedoch verbesserten mechanischen Eigenschaften herzustellen unter Verwendung von bei Raumtemperatur flüssigen Isocyanat-Semiprepolymeren auf Polyester-polyolbasis mit einer verbesserten Lagerbeständigkeit, auch bei Temperaturen um 0°C.

Diese Aufgabe konnte überraschenderweise gelöst werden durch den Einsatz von neuen, bei Raumtemperatur flüssigen, estergruppenhaltigen Isocyanat-Semiprepolymeren zur Herstellung der PU-Ester-Integralschaumstoffe.

Gegenstand der Erfindung ist somit ein Verfahren zur Herstellung von Ester- und Urethangruppen enthaltenden Formkörpern mit einem zelligen Kern und einer verdichteten Randzone durch Umsetzung von

    a) estergruppenhaltigen Isocyanat-Semiprepolymeren mit

    b) mindestens einer höhermolekularen Polyhydroxylverbindung und gegebenenfalls

    c) niedermolekularen Kettenverlängerungsmitteln, Vernetzungsmitteln oder Mischungen aus Kettenverlängerungs- und Vernetzungsmitteln

in Gegenwart von

d) Treibmitteln,

e) Katalysatoren
sowie in Gegenwart oder Abwesenheit von

f) Zusatzstoffen

in einem geschlossenen Formwerkzeug unter Verdichtung, das dadurch gekennzeichnet ist, daß man als Isocyanat-Semiprepolymere (a) Umsetzungsprodukte mit einem Isocyanatgehalt von 10 bis 26 Gew.-% verwendet, hergestellt aus

ai) 4,4'-MDI oder Mischungen aus 4,4'-MDI und gegebenenfalls modifizierten MDI-Isomeren,

aii) mindestens einem Polyester-polyol mit einer Funktionalität von 2 bis 3 und einem Molekulargewicht von 600 bis 3000 und

aiii) mindestens einer verzweigtkettigen, mindestens eine Estereinheit als Brückenglied gebunden enthaltenden Dihydroxyverbindung mit einem Molekulargewicht bis 500.

Ein anderer Gegenstand der Erfindung sind bei Raumtemperatur flüssige, estergruppenhaltige Isocyanat-Semiprepolymere mit einem Isocyanatgehalt von 10 bis 26 Gew.-%, die hergestellt werden durch Umsetzung von

ai) 4,4'-MDI oder Mischungen aus 4,4'-MDI und gegebenenfalls modifizierten MDI-Isomeren mit

aii) mindestens einem Polyester-polyol mit einer Funktionalität von 2 bis 3 und einem Molekulargewicht von 600 bis 3000 und

aiii) mindestens einer mindestens eine Estereinheit als Brückenglied und seitenständige Alkylgruppen gebunden enthaltenden Dihydroxyverbindung mit einem Molekulargewicht bis 500.

Unter bei Raumtemperatur flüssigen, estergruppenhaltigen Isocyanat-Semiprepolymeren sind im Sinne der Erfindung Umsetzungsprodukte, hergestellt aus (ai) bis (aiii) zu verstehen, die bei 45°C eine Viskosität, gemessen mit einem Rotationsviskosimeter nach DIN 53018 von 200 bis 2500 mPas besitzen und bei Temperaturen über 10°C flüssig verarbeitbar sind.
Die erfindungsgemäßen Isocyanat-Semiprepolymeren mit einem Isocyanatgehalt von 10 bis 26 Gew.-%, vorzugsweise 15 bis 22 Gew.-% sind ferner bei 15°C mindestens ein Monat, vorzugsweise mehr als 3 Monate lagerbeständig, d.h. sie bilden in diesem Zeitraum keine kristallinen Sedimente.
Trotz der bevorzugten Verwendung von Wasser als Treibmittel besitzen die nach dem erfindungsgemäßen Verfahren hergestellten Ester- und Urethangruppen enthaltenden Formkörper eine ausgeprägte Randzone höherer Dichte mit einer im wesentlichen glatten Außenhaut. Die Härte Shore A der Randzone entspricht ebenso wie die übrigen mechanischen Eigenschaften den mit FCKW aufgeschäumten PU-Integralschaumstoff-Formkörpern. Die Systemkomponenten sind ferner sehr gut fließfähig und nach den gängigen Verfahren, z.B. nach der RIM- oder Niederdruck-Technik problemlos zu Formkörpern, vorzugsweise Schuhsohlen, verarbeitbar.

a) Zur Herstellung der neuen bei Raumtemperatur flüssigen, estergruppenhaltigen Isocyanat-Semiprepolymeren (a) mit einem Isocyanatgehalt von 10 bis 26 Gew.-%, vorzugsweise 15 bis 22 Gew.-% und zu den für das erfindungsgemäße Verfahren zur Herstellung der Ester- und Urethangruppen enthaltenden Formkörper verwendbaren Aufbaukomponenten (b) bis (f) ist im einzelnen folgendes auszuführen:

ai) Zur Herstellung der Isocyanat-Semiprepolymeren (a) findet als Polyisocyanat (ai) insbesondere 4,4'-MDI Verwendung. Vorzüglich bewährt haben sich auch Mischungen aus 4,4'- und 2,4'-MDI, zweckmäßigerweise solche mit einem 4,4'-MDI-Gehalt von mindestens 40 Gew.-%, vorzugsweise mindestens 80 Gew.-%, so daß auch derartige Mischungen bevorzugt sind. Geeignet sind jedoch auch Mischungen aus 4,4'-MDI, 2,4'-MDI und 4,4'- und 2,4'-MDI, bei denen die Isocyanatgruppen zumindest teilweise in einer vorgängigen Reaktionsstufe zu Carbodiimidgruppen, Urethangruppen und/oder Urethanimingruppen umgesetzt wurden.

aii) Die erfindungsgemäß als Modifizierungsmittel in Betracht kommenden Polyester-polyole (aii) besitzen vorteilhafterweise eine Funktionalität von 2 bis 3, vorzugsweise von 2,0 bis 2,5 und ein Molekulargewicht von 600 bis 3000, vorzugsweise 1000 bis 3000 und insbesondere 1200 bis 2400. Die in der Patentbeschreibung für die Polyhydroxylverbindungen genannten Molekulargewichte wurden berechnet nach der Formel

$$\text{Molekulargewicht} = \frac{56100 \times \text{Funktionalität}}{\text{Hydroxylzahl}}$$

wobei die Hydroxylzahl in bekannter Weise experimentell gemessen wurde.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäure-mono- und/oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35:35 bis 50:20 bis 32 Gew.-Teilen, und insbesondere Adipinsäure. Beispiele für zwei- und höherwertige Alkohole, insbesondere Alkandiole und Alkylenglykole sind: Ethandiol, Diethylen-glykol, 1,2- bzw. 1,3-Propandiol, Dipropylen-glykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol, Glycerin oder Mischungen aus mindestens zwei der genannten Diole, insbesondere Mischungen aus 1,4-Butandiol, 1,5-Pentandiol und 1,6-Hexandiol und/oder Glycerin. Eingesetzt werden können ferner Polyester-polyole aus Lactonen, z.B. ε-Caprolacton oder Hydroxycarbonsäuren, z.B. @-Hydroxycapronsäure.

Zur Herstellung der Polyester-polyole können die organischen, vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/ oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert. Zur Abtrennung von cyclischen flüchtigen Nebenprodukten können die Polyester-polyole nachträglich zusätzlich einer Destillation unter vermindertem Druck, z.B. mittels eines Dünnschichtverdampfers, unterworfen werden. Die Polyester-polyole können einzeln oder als Mischungen verwendet werden.

aiii) Erfindungsgemäß werden die Polyisocyanate (ai) zur Herstellung der Estergruppen aufweisenden Isocyanat-Semiprepolymeren (a) partiell mit Polyester-polyolen (aii) und Dihydroxyverbindungen (aiii) mit einem Molekulargewicht bis 500, vorzugsweise 180 bis 320 zur Reaktion gebracht, mit der Maßgabe, daß die Dihydroxyverbindungen, vorzugsweise aliphatischen Dihydroxyverbindungen, mindestens eine Estereinheit, vorzugsweise eine oder 2 Estereinheiten als Brückenglied gebunden haben und verzweigtkettig sind. Zur Bildung der Verzweigungen besitzen die estergruppenhaltigen Dihydroxyverbindungen mindestens 2, vorzugsweise 2 bis 12 und insbesondere 4 bis 8 seitenständigen Substituenten, wobei Alkoxygruppen und/oder insbesondere Alkylgruppen mit 1 bis 6 Kohlenstoffatomen, vorzugsweise 1 bis 2 Kohlenstoffatomen als Substituenten bevorzugt sind. Als geeignete Substituenten beispielhaft genannt seien die Methoxy-, Ethoxy-, Isopropoxy-, Ethyl-, n- und iso-Propyl-, n-Butyl- und insbesondere die Methylgruppe. Zur Herstellung der Dihydroxyverbindungen finden zweckmäßigerweise lineare oder verzweigte aliphatische Hydroxycarbonsäuren mit 2 bis 6, vorzugsweise 2 bis 5 C-Atomen, wie z.B. Glykolsäure, Milchsäure, α-, β-, γ-Hydroxybuttersäure, ω-Hydroxycapronsäure und insbesondere Hydroxypivalinsäure Verwendung. Geeignet sind jedoch auch Hydroxybenzoesäuren. Beispiele für Diole zur Herstellung der estergruppenhaltigen Dihydroxyverbindungen (aiii) sind Dialkylen-glykole, z.B. Diethylen- und Dipropylen-glykol, oligomere Polyoxyalkylen-glykole mit Molekulargewichten bis 300 auf Basis von Ethylenoxid und/ oder 1,2-Propylenoxid, z. B. Polyoxypropylen- und Polyoxyethylen-polyoxypropylen-glykol, lineare Alkandiole mit 2 bis 10 C-Atomen, vorzugsweise 2 bis 6 C-Atomen, wie z.B. Ethan-, 1,3-Propan-, 1,4-Butan-, 1,5-Pentan-, 1,6-Hexan-, 1,8-Octan- und 1,10-Decandiol und vorzugsweise verzweigtkettige Alkandiole mit 3 bis 15 C-Atomen, vorzugsweise 3 bis 10 C-Atomen wie z.B. 1,2-Propan-, 1,2-, 1,3-Butan-, 2-Methyl-1,3-propandiol, 2,2-Dimethyl-, 2-Methyl-2-ethyl-, 2-Ethyl-2-butyl-, 2-Ethoxy-pentandiol-1,5, 2,2-Dimethyl-, 2,2,5-Trimethylhexandiol-1,6, Pentandiol-1,2, 2,5-Dimethyl-hexandiol-2,5 und insbesondere 2,2-Dimethyl-propandiol-1,3. Als verzweigtkettige, estergruppenhaltige Dihydroxyverbindungen (aiii) bewährt haben sich z.B. Umesterungsprodukte aus 2 Mol Hydroxypivalinsäurealkylestern mit einem Mol Dialkylen-glykol, Polyoxyalkylen-glykol, linearem Alkandiol und vorzugsweise verzweigtem Alkandiol, wie sie z.B. in der US-A-5 053 528 beschrieben werden und deren gesamte Offenbarung als Bestandteil der Erfindungsbeschreibung zu betrachten ist, Ester aus 2 Mol einer linearen Hydroxycarbonsäure und einem Mol eines verzweigten Alkandiols und vorzugsweise Ester aus einem Mol einer verzweigten Hydroxycarbonsäure und einem Mol eines verzweigten Alkandiols. Insbesondere Verwendung findet der Hydroxypivalinsäureneopentylglykolester.

Zur Herstellung der erfindungsgemäßen estergruppenhaltigen Isocyanat-Semiprepolymeren (a) mit einem Isocyanatgehalt von 10 bis 26 Gew.-% können die Aufbaukomponenten, bezogen auf das Gesamtgewicht des Semiprepolymeren, in folgenden Mengen bei Temperaturen von 15 bis 120°C, vorzugsweise 45 bis 90°C zur Reaktion gebracht werden

ai) 94 bis 25 Gew.-%, vorzugsweise 77 bis 53 Gew.-% (ai),
aii) 5 bis 60 Gew.-%, vorzugsweise 20 bis 40 Gew.-% (aii) und
aiii) 1 bis 15 Gew.-%, vorzugsweise 3 bis 7 Gew.-% (aiii).

Die gegebenenfalls modifizierten 4,4'-MDI und/oder 2,4'-MDI können hierzu, sofern sie nicht bereits bei Raumtemperatur flüssig sind, durch Erwärmen verflüssigt und danach unter Rühren mit den Polyester-polyolen (aii) und den verzweigtkettigen, estergruppenhaltigen Dihydroxyverbindungen (aiii) einzeln nacheinander oder mit einer Mischung aus (aii) und (aiii) zur Reaktion gebracht werden. Nach einer bevorzugten Ausführungsform werden die Polyisocyanate (ai) zunächst mit mindestens einem Polyesterpolyol (aii) und danach mit mindestens einer niedermolekularen Dihydroxyverbindung (aiii) umgesetzt. Zur Vervollständigung der Reaktion hat es sich als zweckmäßig erwiesen, die Reaktionsmischung in dem vorgenannten Temperaturbereich, z.B. bei 45 bis 90°C, 0,5 bis 6 Stunden, vorzugsweise 1 bis 3 Stunden zu rühren und danach unter Rühren auf Raumtemperatur abkühlen zu lassen.

Zur Herstellung der FCKW-freien, Ester- und Urethangruppen enthaltenden Formkörper mit einem zelligen Kern und einer verdichteten Randzone werden die erfindungsgemäßen flüssigen, lagerstabilen, estergruppenhaltigen Isocyanat-Semiprepolymeren (a) wie bereits ausgeführt wurde, mit üblichen höhermolekularen Polyhydroxylverbindungen (b) und gegebenenfalls niedermolekularen Kettenverlängerungsmitteln und/oder Vernetzungsmitteln (c) in Gegenwart von Treibmitteln (d), Katalysatoren (e) und gegebenenfalls Zusatzstoffen (f) in einem geschlossenen Formwerkzeug unter Verdichtung aufschäumen und aushärten gelassen.

(b) Geeignete höhermolekulare Polyhydroxylverbindungen hierfür besitzen vorteilhafterweise eine Funktionalität von 2 bis 4, vorzugsweise 2 bis 3 und ein Molekulargewicht von 1200 bis 7000, vorzugsweise von 1200 bis 3600. In Betracht kommen beispielsweise die an sich bekannten Polyether-polyole, Polyoxytetramethylen-glykole, polymermodifizierten Polyether-polyole, Polyether-polyoldispersionen, hydroxylgruppenhaltige Polyesteramide und hydroxylgruppenhaltige Polyacetale. Besonders bewährt haben sich und daher vorzugsweise verwendet werden hydroxylgruppenhaltige Polycarbonate, zweckmäßigerweise solche, hergestellt aus Hexandiol-1,6 und/oder Butandiol-1,4 und Diphenylcarbonat durch Umesterung, Polyether-polyester-polyole, hergestellt durch Veresterung von Polyoxytetramethylen-glykolen mit Molekulargewichten von 250 bis 1600, vorzugsweise von 250 bis 600 oder von Mischungen aus den genannten Polyoxytetramethylen-glykolen und Alkandiolen mit 2 bis 6 C-Atomen und/oder Dialkylen-glykolen mit 4 bis 6 C-Atomen mit Alkandicarbonsäuren mit 4 bis 6 C-Atomen, wie z.B. Bernstein-, Glutar- und Adipinsäure oder Mischungen aus mindestens 2 der genannten Dicarbonsäuren und insbesondere Polyester-polyole, hergestellt aus den vorgenannten, zur Herstellung der Polyester-polyole (aii) verwendbaren Polycarbonsäuren und mehrwertigen Alkoholen und/oder Dialkylen-glykolen.

c) Die Ester- und Urethangruppen enthaltenden, z.B. halbharten und vorzugsweise weichelastischen Formkörper mit verdichteter Randzone und zelligem Formkörperkern, die sogenannten PU-Integralschaumstoffe, können nach dem erfindungsgemäßen Verfahren ohne oder unter Mitverwendung von Kettenverlängerungs- und/oder Vernetzungsmitteln (c) hergestellt werden. Zur Modifizierung der mechanischen Eigenschaften, z.B. der Härte, kann sich jedoch bei weichelastischen und halbharten PU-Integralschaumstoffen der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können verwendet werden z.B. niedermolekulare, mehrwertige Alkohole, vorzugsweise Diole und/oder Triole, mit Molekulargewichten kleiner als 400, vorzugsweise von 60 bis 300. In Betracht kommen als Kettenverlängerungsmittel beispielsweise aliphatische, cycloaliphatische und/ oder araliphatische Diole, wie z.B. Alkandiole mit 2 bis 14, vorzugsweise 2 bis 6 Kohlenstoffatomen und/oder Dialkylenglykole mit 4 bis 8, vorzugsweise 4 bis 6 Kohlenstoffatomen, wie z.B. Ethylenglykol, Propandiol-1,3, Decandiol-1,10, o-, m-, p-Dihydroxycyclohexan, Diethylenglykol, Triethylenglykol, Dipropylenglykol, Tripropylenglykol und vorzugsweise Butandiol-1,3, Butandiol-1,4, Hexandiol-1,6 und Bis-(2-hydroxyethyl)-hydrochinon, und als Vernetzungsmittel beispielsweise Triole, wie z.B. 1,2,4-, 1,3,5-Trihydroxycyclohexan, Trimethylolethan, Glycerin und Trimethylolpropan.

Sofern die Verbindungen der Komponente (c) mitverwendet werden, können diese in Form von Mischungen oder einzeln eingesetzt werden und werden vorteilhafterweise in Mengen von 1 bis 50 Gew.-Teilen, vorzugsweise von 3 bis 40 Gew.-Teilen, bezogen auf 100 Gew.-Teile der höhermolekularen Verbindungen (b), angewandt.

d) Als Treibmittel (d) findet vorzugsweise Wasser Verwendung, das mit den estergruppenhaltigen Isocyanat-Semiprepolymeren (a) in situ unter Bildung von Kohlendioxid und Aminogruppen reagiert, die ihrerseits mit den Isocyanat-Semiprepolymeren (a) zu Harnstoffgruppen weiterreagieren und dadurch die Druckfestigkeit der PU-Integralschaumstoff-Formkörper beeinflussen können. Da die Aufbaukomponenten (b) und gegebenenfalls (c) aufgrund der Herstellung und/oder chemischen Zusammensetzung Wasser aufweisen können, bedarf es in manchen Fällen keiner separaten Wasserzugabe zu den Aufbaukomponenten (b) und gegebenenfalls (c) oder der Reaktionsmischung. Sofern jedoch der Polyurethan-Formulierung zusätzlich Wasser einverleibt werden muß zur Erzielung des gewünschten Raumgewichts, wird dieses üblicherweise in Mengen von 0,05 bis 4,0 Gew.-%, vorzugsweise von 0,1 bis 3,0 Gew.-% und insbesondere von 0,3 bis 2,5 Gew.-%, bezogen auf das Gewicht der Aufbaukomponente (a) bis (c), verwendet.

Als Treibmittel (d) können anstelle von Wasser oder vorzugsweise in Kombination mit Wasser auch niedrigsiedende Flüssigkeiten, die unter dem Einfluß der exothermen Polyadditionsreaktion verdampfen und vorteilhafterweise einen Siedepunkt unter Normaldruck im Bereich von -40 bis 120°C, vorzugsweise von 10 bis 90°C besitzen, oder Gase eingesetzt werden.

Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan, Dialkylether, wie z.B. Dimethylether, Methylethylether oder Diethylether, tert.-Butylmethylether, Cycloalkylenether, wie z.B. Furan, Ketone, wie z.B. Aceton, Methylethylketon, Acetale und/oder Ketale, wie z.B. Formaldehyddimethylacetal, 1,3-Dioxolan und Acetondimethylacetal, Carbonsäureester, wie z.B. Ethylacetat, Methylformiat und Ethylen-Acrylsäuretertiärbutylester, tertiäre Alkohole, wie z.B. tertiär Butanol, Carbonsäuren wie z.B. Ameisensäure, Essigsäure und Propionsäure, Fluoralkane, die in der Trophosphäre abgebaut werden und deshalb für die Ozonschicht unschädlich sind, wie z.B. Trifluormethan, Difluormethan, Difluorethan, Tetrafluorethan und Heptafluorethan, Chloralkane, wie z.B. 2-Chlorpropan, und Gase, wie z.B. Stickstoff, Kohlenmonoxid und Edelgase wie z.B. Helium, Neon und Krypton.

Von den als Treibmittel (d) geeigneten, bezüglich NCO-Gruppen inerten Flüssigkeiten werden vorzugsweise Alkane, Cycloalkane oder Mischungen mit einem Siedepunkt von -40 bis 50°C unter Atmosphärendruck aus Alkanen und Cycloalkanen verwendet.

Als Treibmittel geeignet sind ferner Salze, die sich thermisch zersetzen, wie z.B. Ammoniumbicarbonat und/ oder Ammoniumcarbamat oder Verbindungen, die in situ solche Salze bilden, wie z.B. wäßriger Ammoniak und/ oder Amine und Kohlendioxid, und Ammoniumsalze organischer Carbonsäuren, wie z.B. die Monoammoniumsalze der Malonsäure, Borsäure, Ameisensäure oder Essigsäure.

Die zweckmäßigste Menge an festen Treibmitteln, niedrigsiedenden Flüssigkeiten und Gasen, die jeweils einzeln oder in Form von Mischungen, z.B. als Flüssigkeits- oder Gasmischungen oder als Gas-Flüssigkeitsgemische eingesetzt werden können, hängt ab von der Dichte, die man erreichen will und der eingesetzten Menge an Wasser. Die erforderlichen Mengen können durch einfache Handversuche leicht ermittelt werden. Zufriedenstellende Ergebnisse liefern üblicherweise Feststoffmengen von 0,5 bis 35 Gew.-Teilen, vorzugsweise von 2 bis 15 Gew.-Teilen, Flüssigkeitsmengen von 1 bis 30 Gew.-Teilen, vorzugsweise von 3 bis 18 Gew.-Teilen und/oder Gasmengen von 0,01 bis 80 Gew.-Teilen, vorzugsweise von 10 bis 35 Gew.-Teilen, jeweils bezogen auf das Gewicht der Aufbaukomponenten (a), (b) und gegebenenfalls (c). Die Gasbeladung mit z.B. Luft, Kohlendioxid, Stickstoff und/oder Helium kann sowohl über die höhermolekularen Verbindungen (b) und gegebenenfalls niedermolekularen Kettenverlängerungs- und/oder Vernetzungsmitteln (c) als auch über die Polyisocyanate (a) oder über (a) und (b) und gegebenenfalls (c) erfolgen.

Als Treibmittel keine Anwendung finden, wie bereits ausgeführt wurde, Perfluorchlorkohlenwasserstoffe.

e) Als Katalysatoren (e) zur Herstellung der PU-Schaumstoff-Formkörper werden insbesondere Verbindungen verwendet, die die Reaktion der Hydroxylgruppen enthaltenden Verbindungen der Aufbaukomponente (b) und gegebenenfalls (c) mit den estergruppenhaltigen Isocyanat-Semiprepolymeren (a) stark beschleunigen. In Betracht kommen beispielsweise organische Metallverbindungen, z.B. Zinkstearat, Zinkoleat und vorzugsweise organische Zinnverbindungen, wie z.B. Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinn-dilaurat, Dibutylzinnmaleat und Dioctylzinn-diacetat, organische Amidine, wie z.B. 2,3-Dimethyl-3,4,5,6-tetrahydropyrimidin, tertiäre Amine, wie z.B. Triethylamin, Tributylamin, Methyldicyclohexylamin, Dimethylbenzylamin-1,4, N-Methyl-, N-Ethyl-, N-Cyclohexylmorpholin, Dimethylaminopropylamin, Bis-(dimethylamino-N-propyl)-methylamin, N,N,N',N'-Tetramethyl-ethylendiamin, N,N,N'N'-Tetramethyl-butandiamin-1,4, N,N,N'N'-Tetramethylhexandiamin-1,6, Pentamethyl-diethylentriamin, Tetramethyldiaminoethylether, 2-Hydroxy-2'-dimethylamino-diethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie z.B. Triethanolamin, Triisopropanolamin, N-Methyl- und N-Ethyl-diethanolamin und Dimethylethanolamin. Vorzugsweise verwendet werden 1,4-Diaza-bicyclo-(2,2,2)-octan, insbesondere in Form einer Lösung in Ethylenglykol oder Butandiol-1,4, Dimethylaminopropylamin sowie Kombination dieser tertiären Amine mit Zinnsalzen. Vorzugsweise verwendet werden 0,01 bis 3 Gew.-%, insbesondere 0,8 bis 1,4 Gew.-% Katalysator bzw. Katalysatorkombination bezogen auf das Gewicht der Komponente (b). Die organischen Metallverbindungen und stark basischen Amine, vorzugsweise tertiären Amine, können beispielsweise jeweils als alleinige Katalysatoren oder in Kombination miteinander eingesetzt werden.

(f) Der Reaktionsmischung zur Herstellung der Ester- und Urethangruppen enthaltenden, vorzugsweise weichelastischen Formkörper mit einem zelligen Kern und einer verdichteten Randzone können gegebenenfalls auch noch Zusatzstoffe (f) einverleibt werden. Genannt seien beispielsweise oberflächenaktive Substanzen, Schaumstabilisatoren, Zellregler, Gleitmittel, Füllstoffe, Farbstoffe, Pigmente, Flammschutzmittel, innere Trennmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie z.B. Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Gleitmittel hat sich der Zusatz eines Ricinolsäurepolyesters mit einem Molekulargewicht von 1500 bis 3500, vorzugsweise von 2000 bis 3000 besonders bewährt, der zweckmäßigerweise in einer Menge von 0,5 bis 10 Gew.-%, vorzugsweise 5 bis 8 Gew.-%, bezogen auf das Gewicht der Komponente (b) oder der Komponenten (b) und (c) eingesetzt wird.

Als Füllstoffe, insbesondere verstärkend wirkende Füllstoffe, sind die an sich bekannten, üblichen organischen und anorganischen Füllstoffe und Verstärkungsmittel zu verstehen. Im einzelnen seien beispielhaft genannt: anorganische Füllstoffe wie z.B. silikatische Mineralien, beispielsweise Schichtsilikate wie Antigorit, Serpentin, Hornblenden, Amphibole, Chrysotil, Talkum; Metalloxide, wie z.B. Kaolin, Aluminiumoxide, Aluminiumsilikat, Titanoxide und Eisenoxide, Metallsalze wie z.B. Kreide, Schwerspat und anorganische Pigmente, wie z.B. Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.-%, bezogen auf das Gewicht der Komponenten (a) bis (c), einverleibt.

Geeignete Flammschutzmittel sind beispielsweise Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat und Tetrakis-(2-chlorethyl)-ethylendiphosphat.

Außer den bereits genannten halogensubstituierten Phosphaten können auch anorganische Flammschutzmittel, wie roter Phosphor, Blähgraphit, Aluminiumoxidhydrat, Antimontrioxid, Arsenoxid, Ammoniumpolyphosphat und Calciumsulfat oder Cyanursäurederivate, wie z.B. Melamin oder Mischungen aus mindestens zwei Flammschutzmitteln, wie z.B. Blähgraphit und Ammoniumpolyphosphat, Ammoniumpolyphosphaten und Melamin sowie gegebenenfalls Blähgraphit und/oder Stärke zum Flammfestmachen der erfindungsgemäß hergestellten Formkörper verwendet werden. Im allgemeinen hat es sich als zweckmäßig erwiesen 2 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der Formkörper werden die estergruppenhaltigen Isocyanat-Semiprepolymeren (a), höhermolekularen Polyhydroxylverbindungen (b) und gegebenenfalls niedermolekularen Kettenverlängerungs- und/oder Vernetzungsmittel (c) üblicherweise in solchen Mengen zur Umsetzung gebracht, daß das Äquivalenz-Verhältnis von NCO-Gruppen der Semiprepolymeren (a) zur Summe der reaktiven Wasserstoffatome der Komponenten (b) und gegebenenfalls (c) 0,45 bis 1,80:1, vorzugsweise 0,95 bis 1,15:1 und insbesondere 0,9 bis 1,1:1 beträgt.

Die erfindungsgemäßen Ester- und Urethangruppen enthaltenden z.B. halbharten oder vorzugsweise weichelastischen Formkörper können nach dem one shot-Verfahren mit Hilfe der Niederdruck-Technik oder der Hochdrucktechnik in geschlossenen, zweckmäßigerweise temperierbaren Formwerkzeugen, beispielsweise metallischen Formwerkzeugen, z.B. aus Aluminium, Gußeisen oder Stahl, oder Formwerkzeugen aus faserverstärkten Polyester- oder Epoxidformmassen hergestellt werden. Aufgrund der guten Fließfähigkeit und verbesserten Verarbeitbarkeit der Formulierungen werden die Formkörper jedoch insbesondere mittels der Reaktionsspritzgußtechnik (RIM-Technik) hergestellt. Diese Verfahrensweisen werden beispielsweise beschrieben von Dr. Piechota und Dr. Röhr in "Integralschaumstoff", Carl-Hanser-Verlag, München, Wien 1975; D.J. Prepelka und J.L. Wharton in Journal of Cellular Plastics, März/April 1975, Seiten 87 bis 98, U. Knipp in Journal of Cellular Plastics, März/ April 1973, Seiten 76 bis 84 und im Kunststoff-Handbuch, Band 7, Polyurethane, 2. Auflage, 1983, Seiten 333 ff.

Als besonders vorteilhaft hat es sich erwiesen, nach dem Zweikomponenten-Verfahren zu arbeiten und die Aufbaukomponenten (b), (d), (e) und gegebenenfalls (c) und (f) in der Komponente (A) zu vereinigen und als Komponente (B) die erfindungsgemäßen estergruppenhaltigen Isocyanat-Semiprepolymeren (a) zu verwenden.

Die Ausgangskomponenten werden zweckmäßigerweise bei einer Temperatur von 15 bis 80°C, vorzugsweise von 25 bis 55°C gemischt und gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 120°C, vorzugsweise 30 bis 80°C und insbesondere 45 bis 60°C. Die Verdichtungsgrade liegen im Bereich von 1,4 bis 8,3, vorzugsweise von 2 bis 7 und insbesondere von 2,4 bis 4,5.

Die Menge des in das Formwerkzeug eingebrachten Reaktionsgemisches wird vorteilhafterweise so bemessen, daß die erhaltenen Formkörper eine Gesamtdichte von 0,06 bis 0,9 g/cm$^3$ aufweisen, wobei z.B. die halbharten Formkörper vorzugsweise eine Gesamtdichte von 0,1 bis 0,9 g/cm$^3$, insbesondere von 0,35 bis 0,7 g/cm$^3$ und die weichelastischen Formkörper vorzugsweise eine Gesamtdichte von 0,2 bis 0,7 g/cm$^3$, vorzugsweise von 0,3 bis 0,5 g/cm$^3$ besitzen.

Die nach dem erfindungsgemäßen Verfahren hergestellten weichelastischen Formkörper finden beispielsweise Verwendung als Armlehnen, Kopfstützen und Sicherheitsverkleidungen im Kraftfahrzeuginnenraum, als Sportartikel sowie als Fahrrad- oder Motorradsattel. Sie eignen sich ferner als Lenkräder für Verkehrsmittel, vorzugsweise Kraftfahrzeuge und als Innenschuh für Skistiefel sowie insbesondere als Schuhsohlen. Die halbharten Formkörper eignen sich z.B. als Armaturenbretter und Seitenverkleidungen in Verkehrsmitteln, als Skikerne und für die Ummantelung von metallischen Behältern, vorzugsweise von Metallfässern für Getränke, beispielsweise alkoholische oder alkoholfreie Getränke wie z.B. Bier oder Fruchtsäfte.

Beispiele

Herstellung der estergruppenhaltigen Isocyanat-Semiprepolymeren

Einsatzstoffe:

Polyisocyanat (ai): 4,4'-MDI

Polyester-polyol (aiil) : Difunktionelles Polyester-polyol mit einem Molekulargewicht von 2000 und einer Viskosität von 615 mPas, gemessen bei 75°C mit einem Rotationsviskosimeter nach DIN 53018, hergestellt durch Polykondensation von Adipinsäure mit Ethylen-glykol und Butandiol-1,4 im Molverhältnis 3:2:1.

Polyester-polyol (aiiII): Polyester-polyol mit einem Molekulargewicht von 2200, einer Funktionalität von 2,15 und einer Viskosität von 700 mPas, gemessen bei 75°C mit einem Rotationsviskosimeter nach DIN 53018, hergestellt durch Polykondensation von Adipinsäure, Ethylenglykol, Diethylenglykol, Butandiol-1,4 und Trimethylolpropan im Molverhältnis 9,1:5:3:1:0,1.

Verzweigtkettige, mindestens eine Estereinheit enthaltende Dihydroxyverbindung (aiii) : Hdroxypivalinsäure-neopentylglykolester der Formel

$$HOH_2C\text{-}C(CH_3)_2\text{-}CO\text{-}O\text{-}CH_2\text{-}C(CH_3)_2\text{-}CH_2OH,$$

(abgekürzt im folgenden "HPN" genannt).

Allgemeine Herstellungsvorschrift

In einem Dreihalskolben, ausgestattet mit Rührer, Rückflußkühler und Gasein- und -ableitungsvorrichtung, wurde unter einer Atmosphäre aus trockenem Stickstoff 4,4'-MDI auf 50°C erwärmt und unter Rühren mit einem Polyester-polyol (aii) und danach zur Herstellung der erfindungsgemäßen Isocyanat-Semiprepolymeren (a) mit HPN (aiii) zur Reaktion gebracht. Durch die bei der Polyadditionsreaktion freiwerdende Wärme stieg die Temperatur der Reaktionsmischung auf ca. 75°C. Zur Vervollständigung der Isocyanat-Semiprepolymerbildung wurde die Reaktionsmischung auf 80°C erwärmt, bei dieser Temperatur eine Stunde gerührt und danach abkühlen gelassen.

Die Menge und Art der verwendeten Aufbaukomponenten und die an den hergestellten Isocyanat-Semiprepolymeren ermittelten Eigenschaften sind in der folgenden Tabelle 1 zusammengefaßt. Hierbei bedeutet "Stabilität(+)", daß die Isocyanat-Semiprepolymeren nach 7-tägiger Lagerung bei 15°C eine klare Flüssigkeit und "Stabilität(-)", daß die Isocyanat-Semiprepolymeren unter den gleichen Lagerbedingungen auskristallisiert sind.

Tabelle 1

| Beispiel | Isocyanat-Semiprepolymer, hergestellt durch Umsetzung von | | | | Eigenschaften | | |
|---|---|---|---|---|---|---|---|
| | 4,4'-MDI | Polyester-polyol | | HPN | NCO-Gehalt | Viskosität* bei ...°C | Stabilität 7 Tage/15°C |
| | | Art | Menge | | | | |
| | [Gew-Teile] | | [Gew-Teile] | [Gew-Teile] | [Gew-Teile] | [mPa•s] | |
| 1 | 66 | aiiI | 30 | 4 | 19,3 | 410 | (+) |
| 2 | 64 | aiiI | 30 | 6 | 17,8 | 670 | (+) |
| 3 | 66 | aiiII | 30 | 4 | 19,3 | 380 | (+) |
| 4 | 64 | aiiII | 30 | 6 | 17,8 | 630 | (+) |
| 5 | 58 | aiiII | 40 | 2 | 16,9 | 690 | (+) |
| 6 | 56 | aiiII | 40 | 4 | 15,5 | 1300 | (+) |
| Vergleichs-beispiel | | | | | | | |
| I | 85 | – | – | 15 | 21,5 | 200 | (–) |
| II | 70 | aiiI | 30 | – | 22,3 | 250 | (–) |
| III | 60 | aiiII | 40 | – | 18,5 | 380 | (–) |

* gemessen mit einem Rotationsviskosimeter nach DIN 53018

EP 0 745 626 B1

Herstellung von PU-Integralschaumstoffen

Beispiel 7

A-Komponente: Mischung, die bestand aus

| 90,7 Gew.-Teilen | Polyester-polyol (aiiI), |
|---|---|
| 7,8 Gew.-Teilen | Ethylenglykol, |
| 0,3 Gew.-Teilen | eines Schaumstabilisators auf Silikonbasis (Tegostab® 8450, der Goldschmidt AG, Essen) |
| 0,4 Gew.-Teilen | Triethylendiamin und |
| 0,8 Gew.-Teilen | Wasser |

B-Komponente: Isocyanat-Semiprepolymer, hergestellt gemäß Beispiel 2.

| 100 Gew.-Teile | der A-Komponente und |
|---|---|
| 99 Gew.-Teile | der B-Komponente |

wurden bei 23°C intensiv gemischt. 140 g der Reaktionsmischung wurden in eine auf 45°C temperierte Aluminiumform mit den inneren Abmessungen 20 x 20 x 1 cm eingefüllt, das Formwerkzeug verschlossen und die Reaktionsmischung aufschäumen und aushärten gelassen. Man erhielt eine PU-Schaumstoffplatte mit einer ausgeprägten, im wesentlichen kompakten Randzone und einem zelligen Formkörperkern. Die an der PU-Schaumstoffplatte gemessenen mechanischen Eigenschaften werden in Tabelle 2 genannt.

Beispiel 8

A-Komponente: analog Beispiel 7

B-Komponente: Isocyanat-Semiprepolymer, hergestellt gemäß Beispiel 3

Zur Herstellung der PU-Integralschaumstoffplatte verfuhr man analog den Angaben des Beispiels 7, verwendete jedoch für 100 Gew.-Teile der A-Komponente 91 Gew.-Teile der B-Komponente. Die an der hergestellten PU-Integralschaumstoffplatte gemessenen mechanischen Eigenschaften werden in Tabelle 2 genannt.

Tabelle 2

| Mechanische Eigenschaften der PU-Integralschaumstoffplatten | | |
|---|---|---|
| Beispiel | 7 | 8 |
| mechanische Eigenschaften: | | |
| Gesamtdichte [g/l] | 350 | 350 |
| Härte Shore A nach DIN 53505 | 41 | 42 |
| Zugfestigkeit nach nach DIN 53504 [N/mm$^2$] | 4,5 | 4,1 |
| Dehnung nach DIN 53504 [%] | 350 | 400 |
| Weiterreißfestigkeit nach nach DIN 53507 [N/mm] | 5,5 | 6,3 |
| Dichte freigeschäumt [g/l] | 191 | 185 |

Vergleichsbeispiel

Aus den Isocyanat-Semiprepolymeren gemäß Vergleichsbeispiel I, II und III konnten unter den vorgenannten Reaktionsbedingungen keine PU-Integralschaumstoff-Formkörper hergestellt werden, da diese Isocyanat-Semiprepolymeren bei Raumtemperatur kristallin und daher nach der oben beschriebenen Verfahrensweise nicht zu verarbeiten waren.

**Patentansprüche**

1. Verfahren zur Herstellung von Ester- und Urethangruppen enthaltenden Formkörpern mit einem zelligen Kern und einer verdichteten Randzone durch Umsetzung von

   a) estergruppenhaltigen Isocyanat-Semiprepolymeren mit

   b) mindestens einer höhermolekularen Polyhydroxylverbindung und gegebenenfalls

   c) niedermolekularen Kettenverlängerungsmitteln, Vernetzungsmitteln oder Mischungen aus Kettenverlängerungs- und Vernetzungsmitteln
   in Gegenwart von

   d) Treibmitteln,

   e) Katalysatoren
   sowie in Gegenwart oder Abwesenheit von

   f) Zusatzstoffen

   in einem geschlossenen Formwerkzeug unter Verdichtung, dadurch gekennzeichnet, daß man als Isocyanat-Semiprepolymere (a) Umsetzungsprodukte mit einem Isocyanatgehalt von 10 bis 26 Gew.-% verwendet, hergestellt aus

   ai) 4,4'-Diphenylmethan-diisocyanat oder Mischungen aus 4,4'-Diphenylmethan-diisocyanat und gegebenenfalls modifizierten Diphenylmethan-diisocyanat-Isomeren,

   aii) mindestens einem Polyester-polyol mit einer Funktionalität von 2 bis 3 und einem Molekulargewicht von 600 bis 3000 und

   aiii) mindestens einer verzweigtkettigen, mindestens eine Estereinheit als Brückenglied gebunden enthaltenden Dihydroxyverbindung mit einem Molekulargewicht bis 500.

2. Verfahren nach Anspruch 1, dadurch gekennzeichnet, daß die Dihydroxyverbindungen (aiii) mindestens eine Estereinheit als Brückenglied und mindestens eine seitenständige Alkylgruppe mit 1 bis 4 Kohlenstoffatomen gebunden haben.

3. Verfahren nach Anspruch 1, dadurch gekennzeichnet, daß die Dihydroxyverbindung (aiii) aus Hydroxypivalinsäureneopentylglykolester besteht.

4. Verfahren nach einem der Ansprüche 1 bis 3, dadurch gekennzeichnet, daß die Isocyanat-Semiprepolymeren (a) Umsetzungsprodukte sind, zu deren Herstellung 4,4'-Diphenylmethan-diisocyanat oder Mischungen aus 4,4'- und 2,4'-Diphenylmethandiisocyanat (ai) verwendet werden.

5. Verfahren nach einem der Ansprüche 1 bis 4, dadurch gekennzeichnet, daß die estergruppenhaltigen Isocyanat-Semiprepolymeren (a) mit einem Isocyanatgehalt von 10 bis 26 Gew.-% Umsetzungsprodukte sind, die hergestellt werden durch Umsetzung von, bezogen auf das Gesamtgewicht,

   (ai) 94 bis 25 Gew.-% (ai),
   (aii) 5 bis 60 Gew.-% (aii)und
   (aiii) 1 bis 15 Gew.-% (aiii).

6. Verfahren nach einem der Ansprüche 1 bis 5, dadurch gekennzeichnet, daß die Polyhydroxylverbindungen (b) eine Funktionalität von 2 bis 4 und ein Molekulargewicht von 1200 bis 3600 besitzen und ausgewählt sind aus der Gruppe der Polyester-polyole, der Polyether-polyester-polyole und der hydroxylgruppenhaltigen Polycarbonate.

7. Verfahren nach einem der Ansprüche 1 bis 6, dadurch gekennzeichnet, daß das Treibmittel (d) in situ aus Wasser und dem Isocyanat-Semiprepolymeren (a) gebildet wird.

8. Bei Raumtemperatur flüssige, estergruppenhaltige Isocyanat-Semiprepolymere mit einem Isocyanatgehalt von 10 bis 26 Gew.-%, hergestellt durch Umsetzung von

ai) 4,4'-Diphenylmethan-diisocyanat oder Mischungen aus 4,4'-Diphenylmethan-diisocyanat und gegebenenfalls modifizierten Diphenylmethan-diisocyanat-Isomeren mit

aii) mindestens einem Polyester-polyol mit einer Funktionalität von 2 bis 3 und einem Molekulargewicht von 600 bis 3000 und

aiii) mindestens einer, mindestens eine Estereinheit als Brückenglied und seitenständige Alkylgrupppen gebunden enthaltenden Dihydroxyverbindung mit einem Molekulargewicht bis 500.

9. Bei Raumtemperatur flüssige, estergruppenhaltige Isocyanat-Semiprepolymere nach Anspruch 8, dadurch gekennzeichnet, daß diese hergestellt werden unter Verwendung von

ai) 4,4'-Diphenylmethan-diisocyanat und

aii) Hydroxypivalinsäureneopentylglykolester.

10. Bei Raumtemperatur flüssige estergruppenhaltige Isocyanat-Semiprepolymere nach Anspruch 8 oder 9, dadurch gekennzeichnet, daß diese hergestellt werden durch Umsetzung von, bezogen auf das Gesamtgewicht,

(ai) 94 bis 25 Gew.-% (ai),
(aii) 5 bis 60 Gew.-% (aii) und
(aiii) 1 bis 15 Gew.-% (aiii).

11. Estergruppenhaltige Isocyanat-Semiprepolymere nach einem der Ansprüche 8 bis 10, dadurch gekennzeichnet, daß diese bei 45°C eine Viskosität, gemessen mit einem Rotationsviskosimeter nach DIN 53 018 von 200 bis 2500 mPas besitzen und bei Temperaturen über 10°C flüssig verarbeitbar sind.

12. Verwendung der nach einem Verfahren gemäß Anspruch 1 bis 7 hergestellten Ester- und Urethangruppen enthaltenden Formkörper als Schuhsohlen.


**Claims**

1. A process for producing moldings containing ester and urethane groups and having a cellular core and a densified surface zone by reacting

a) isocyanate semiprepolymers containing ester groups with

b) at least one relatively high molecular weight polyhydroxyl compound and, if desired,

c) low molecular weight chain extenders, crosslinkers or mixtures of chain extenders and crosslinkers in the presence of

d) blowing agents,

e) catalysts
and in the presence or absence of

f) additives

in a closed mold with compaction, wherein the isocyanate semiprepolymers (a) used are reaction products having an isocyanate content of from 10 to 26% by weight prepared from

ai) diphenylmethane 4,4'-diisocyanate or mixtures of diphenylmethane 4,4'-diisocyanate and modified or unmodified diphenylmethane diisocyanate isomers,

aii) at least one polyester polyol having a functionality of from 2 to 3 and a molecular weight of from 600 to 3000 and

aiii) at least one branched-chain dihydroxy compound containing at least one bonded ester unit as bridge and having a molecular weight of up to 500.

2. A process as claimed in claim 1, wherein the dihydroxy compounds (aiii) contain at least one bonded ester unit as bridge and at least one bonded lateral alkyl group having from 1 to 4 carbon atoms.

3. A process as claimed in claim 1, wherein the dihydroxy compound (aiii) is the neopentyl glycol ester of hydroxypivalic acid.

4. A process as claimed in any of claims 1 to 3, wherein the isocyanate semiprepolymers (a) are reaction products prepared using diphenylmethane 4,4'-diisocyanate or mixtures of diphenylmethane 4,4'- and 2,4'-diisocyanate (ai).

5. A process as claimed in any of claims 1 to 4, wherein the isocyanate semiprepolymers (a) containing ester groups and having an isocyanate content of from 10 to 26% by weight are reaction products prepared by reaction of, based on the total weight,

(ai) from 94 to 25% by weight of (ai),
(aii) from 5 to 60% by weight of (aii) and
(aiii) from 1 to 15% by weight of (aiii).

6. A process as claimed in any of claims 1 to 5, wherein the polyhydroxyl compounds (b) have a functionality of from 2 to 4 and a molecular weight of from 1200 to 3600 and are selected from the group of polyester polyols, polyether-polyester polyols and hydroxyl-containing polycarbonates.

7. A process as claimed in any of claims 1 to 6, wherein the blowing agent (d) is formed in situ from water and the isocyanate semiprepolymers (a).

8. An isocyanate semiprepolymer which is liquid at room temperature, contains ester groups and has an isocyanate content of from 10 to 26% by weight, prepared by reacting

ai) diphenylmethane 4,4'-diisocyanate or mixtures of diphenylmethane 4,4'-diisocyanate and modified or unmodified diphenylmethane diisocyanate isomers with

aii) at least one polyester polyol having a functionality of from 2 to 3 and a molecular weight of from 600 to 3000 and

aiii) at least one dihydroxy compound containing at least one bonded ester unit as bridge and bonded lateral alkyl groups and having a molecular weight of up to 500.

9. An isocyanate semiprepolymer as claimed in claim 8, which is liquid at room temperature and contains ester groups, which is prepared using

ai) diphenylmethane 4,4'-diisocyanate and

aii) neopentyl glycol ester of hydroxypivalic acid.

10. An isocyanate semiprepolymer as claimed in claim 8 or 9, which is liquid at room temperature and contains ester groups, which is prepared by reacting, based on the total weight,

(ai) from 94 to 25% by weight of (ai),
(aii) from 5 to 60% by weight of (aii) and
(aiii) from 1 to 15% by weight of (aiii).

11. An isocyanate semiprepolymer containing ester groups as claimed in any of claims 8 to 10, which has a viscosity at 45°C of from 200 to 2500 mPas measured using a rotation viscometer in accordance with DIN 53 018 and is processible in liquid form above 10°C.

12. Use of moldings containing ester and urethane groups and prepared by a process as claimed in any of claims 1 to 7 as shoe soles.

## Revendications

1. Procédé pour la préparation de masses de moulage contenant des groupes d'ester et d'uréthane, présentant un noyau cellulaire et un bord comprimé, par réaction

    a) de semi-prépolymères d'isocyanate contenant des groupes d'ester avec
    b) au moins un composé polyhydroxyle à poids moléculaire élevé et, le cas échéant,
    c) des agents d'allongement de chaîne, des agents de réticulation à poids moléculaires bas ou des mélanges d'agents d'allongement de chaîne et de réticulation,

    en présence

    d) d'agents de gonflement
    e) de catalyseurs

    ainsi qu'en présence ou en l'absence

    f) d'adjuvants

    dans un outil de moulage fermé sous compression, caractérisé en ce qu'on met en oeuvre, comme semi-prépolymères d'isocyanate (a) des produits de réaction, présentant une teneur en isocyanate de 10 à 26 % en poids, préparés à partir

    ai) de 4,4'-diphénylméthane-diisocyanate ou de mélanges de 4,4'-diphénylméthane-diisocyanate et, le cas échéant, des isomères modifiés de diphénylméthane-diisocyanate,
    aii) d'au moins un polyester-polyol présentant une fonctionnalité de 2 à 3 et un poids moléculaire de 600 à 3000 et
    aiii) d'au moins un composé dihydroxy à chaîne ramifiée, contenant au moins une unité d'ester comme élément de pont sous forme liée, présentant un poids moléculaire jusqu'à 500.

2. Procédé selon la revendication 1, caractérisé en ce que les composés dihydroxy (aiii) présentent au moins une unité d'ester comme élément de pont et au moins un groupe alkyle latéral comprenant 1 à 4 atomes de carbone, sous forme liée.

3. Procédé selon la revendication 1, caractérisé en ce que le composé dihydroxy (aiii) est constitué par du néopentylglycolester de l'acide hydroxypivalique.

4. Procédé selon l'une quelconque des revendications 1 à 3, caractérisé en ce que les semi-prépolymères d'isocyanate (a) sont des produits de réaction pour la préparation desquels on utilise du 4,4'-diphénylméthane-diisocyanate ou des mélanges de 4,4'-diphénylméthane-diisocyanate et de 2,4'-diphénylméthane-diisocyanate (ai).

5. Procédé selon l'une quelconque des revendications 1 à 4, caractérisé en ce que les semi-prépolymères d'isocyanate (a) contenant des groupes d'ester, présentant une teneur en isocyanate de 10 à 26 % en poids, sont des produits de réaction préparés par réaction entre, par rapport au poids total,

    ai) 94 à 25 % en poids de (ai),

aii) 5 à 60 % en poids de (aii) et

aiii) 1 à 15 % en poids de (aiii).

6. Procédé selon l'une quelconque des revendications 1 à 5, caractérisé en ce que les composés de polyhydroxyle (b) présentent une fonctionnalité de 2 à 4 et un poids moléculaire de 1200 à 3600 et sont choisis parmi le groupe constitué par les polyester-polyols, les polyéther-polyester-polyols et les polycarbonates contenant un ou plusieurs groupes hydroxyle.

7. Procédé selon l'une quelconque des revendications 1 à 6, caractérisé en ce que l'agent de gonflement (d) est formé in situ à partir d'eau et des semi-prépolymères d'isocyanate (a).

8. Semi-prépolymères d'isocyanate, contenant des groupes d'ester, liquides à température ambiante, présentant une teneur en isocyanate de 10 à 26 % en poids, préparés par réaction entre

ai) du 4,4'-diphénylméthane-diisocyanate ou des mélanges de 4,4'-diphénylméthane-diisocyanate et, le cas échéant, des isomères de diphénylméthane-diisocyanate modifiés et

aii) au moins un polyester-polyol présentant une fonctionnalité de 2 à 3 et un poids moléculaire de 600 à 3000 et

aiii) au moins un composé dihydroxy contenant au moins une unité d'ester comme élément de pont et un groupe alkyle latéral sous forme liée, présentant un poids moléculaire jusqu'à 500.

9. Semi-prépolymères d'isocyanate contenant des groupes ester, liquides à température ambiante selon la revendication 8, caractérisés en ce qu'ils sont préparés en utilisant

ai) du 4,4- diphénylméthane-diisocyanate et

aii) du néopentylglycolester de l'acide hydroxypivalique.

10. Semi-prépolymères d'isocyanate contenant des groupes d'ester, liquides à température ambiante selon la revendication 8 ou 9, caractérisés en ce qu'ils sont préparés par réaction entre, par rapport au poids total,

ai) 94 à 25 % en poids de (ai),

aii) 5 à 60 % en poids de (aii) et

aiii) 1 à 15 % en poids de (aiii).

11. Semi-prépolymères d'isocyanate contenant des groupes d'ester, selon l'une quelconque des revendications 8 à 10, caractérisés en ce qu'ils présentent une viscosité, à 45 °C et mesurée à l'aide d'un viscosimètre rotatif selon la norme DIN 53 018, de 200 à 2500 mPas et en ce qu'ils peuvent être mis en oeuvre sous forme liquide à des températures supérieures à 10 °C.

12. Utilisation des masses de moulage contenant des groupes d'ester ou d'uréthane, préparés selon un quelconque procédé selon la revendication 1 à 7 comme semelles.